**Europäisches Patentamt**

**European Patent Office**

**Office européen des brevets**

(11) Numéro de publication : **0 296 955 B1**

## (12) FASCICULE DE BREVET EUROPEEN

(45) Date de publication du fascicule du brevet :
**04.03.92 Bulletin 92/10**

(21) Numéro de dépôt : **88401536.3**

(22) Date de dépôt : **20.06.88**

(51) Int. Cl.⁵ : **B60R 22/44,** B60R 22/00, B60R 22/30

(54) **Dispositif d'entraînement et de maintien dans une position détendue d'un brin d'une ceinture de sécurité à enrouleur d'un véhicule automobile.**

(30) Priorité : **23.06.87 FR 8708794**

(43) Date de publication de la demande :
**28.12.88 Bulletin 88/52**

(45) Mention de la délivrance du brevet :
**04.03.92 Bulletin 92/10**

(84) Etats contractants désignés :
**AT BE CH DE ES FR GB GR IT LI LU NL SE**

(56) Documents cités :
**DE-A- 2 630 251**
**FR-A- 2 215 846**

(73) Titulaire : **Bouyer, Yvon**
**7, rue Jean Racine**
**F-60001 Goincourt (FR)**
Titulaire : **Michel, André**
**22, rue des Malades**
**F-60000 Saint-Martin le Noeud (FR)**

(72) Inventeur : **Bouyer, Yvon**
**7, rue Jean Racine**
**F-60001 Goincourt (FR)**
Inventeur : **Michel, André**
**22, rue des Malades**
**F-60000 Saint-Martin le Noeud (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue Saint-Denis, 75001 PARIS

## Description

La présente invention concerne un dispositif d'entraînement et de maintien dans une position détendue d'un brin d'une ceinture de sécurité à enrouleur d'un véhicule automobile.

L'invention a pour but de supprimer la nuisance de la pression de la ceinture de sécurité dans un véhicule automobile équipé de ceintures à enrouleur, lesquelles, par rappel permanent de l'enrouleur, produisent une pression sur le corps, un frottement sur les vêtements et des salissures et une sensation de manque de liberté désagréables.

Ces inconvénients ne facilitent pas le port de la ceinture si utile. Or, il est possible de remédier à ces inconvénients, de manière très simple et économique. Il suffit en effet de détendre la ceinture après l'avoir attachée, et pris la position assise convenable, de 5 centimètres seulement et de la maintenir dans la position obtenue en supprimant le rappel de l'enrouleur. Ceci peut être obtenu par un dispositif qui n'entraîne aucune modification ni du montage, ni de la sécurité de la ceinture d'origine laquelle, par un simple avancement du corps, volontaire ou en cas de choc, retrouve instantanément son fonctionnement standard.

A cet effet, l'invention a pour objet un dispositif d'entraînement et de maintien dans une position détendue d'un brin d'une ceinture de sécurité à enrouleur d'un véhicule automobile, caractérisé en ce qu'il comporte un boîtier fixé sur le véhicule automobile et muni d'un fond, dans lequel coulisse le brin, et un curseur déplaçable dans le boîtier sous la commande de moyens d'actionnement à partir d'une position de départ, le long d'un premier trajet de pincement du brin entre le curseur et le fond du boîtier, un second trajet d'entraînement du brin et d'immobilisation de celui-ci par pincement, dans une position détendue, un troisième trajet de relâchement du brin et un quatrième trajet de retour à la position de départ.

Ainsi, le dispositif objet de la présente invention, dans un choix préférentiel, comprend un boîtier de forme rectangulaire allongée, dans lequel un curseur lourd de préférence et garni de caoutchouc mousse par exemple, effectue un mouvement de va-et-vient de bas en haut, en étant tracté manuellement (ou automatiquement par moteur électrique ou autres moyens de traction). Lors de cette élévation, le curseur est plaqué contre la ceinture, et l'entraîne vers le haut, grâce à un coussinet de caoutchouc mousse par exemple ou bien une plaque à ressorts. Durant ce déplacement, le curseur et ses galets suivent deux cames latérales rectilignes qui maintiennent la pression d'entraînement de la ceinture.

En fin de course, deux creux ménagés dans les cames latérales, dans lesquels s'engagent les galets peuvent déterminer un point dur et indiquer ainsi le point de maintien idéal de la ceinture. Volontairement ou en cas de choc, en avançant le corps, on surpasse le point dur de maintien des deux galets et le curseur entraîné par son adhérence avec la ceinture libère totalement la ceinture et passe de l'autre côté des deux cames, le curseur redescend en position basse par son poids, et est ramené à son point de départ pour un autre mouvement de va-et-vient par un ressort de positionnement.

Il est évident que le mouvement décrit ci-dessus peut être remplacé par des mouvements circulaires, semi-circulaires et agissant par coinçage et accrochage de la ceinture.

On va décrire le mode de réalisation préférentiel de la présente invention donné à titre d'exem-ple non limitatif en référence aux dessins annexés, dans lesquels :
– la Fig.1 est une vue de profil du dispositif selon l'invention;
– la Fig.2 est une vue de face de ce même dispositif; et
– la Fig.3 est une exemple non limitatif de déplacement automatique du curseur.

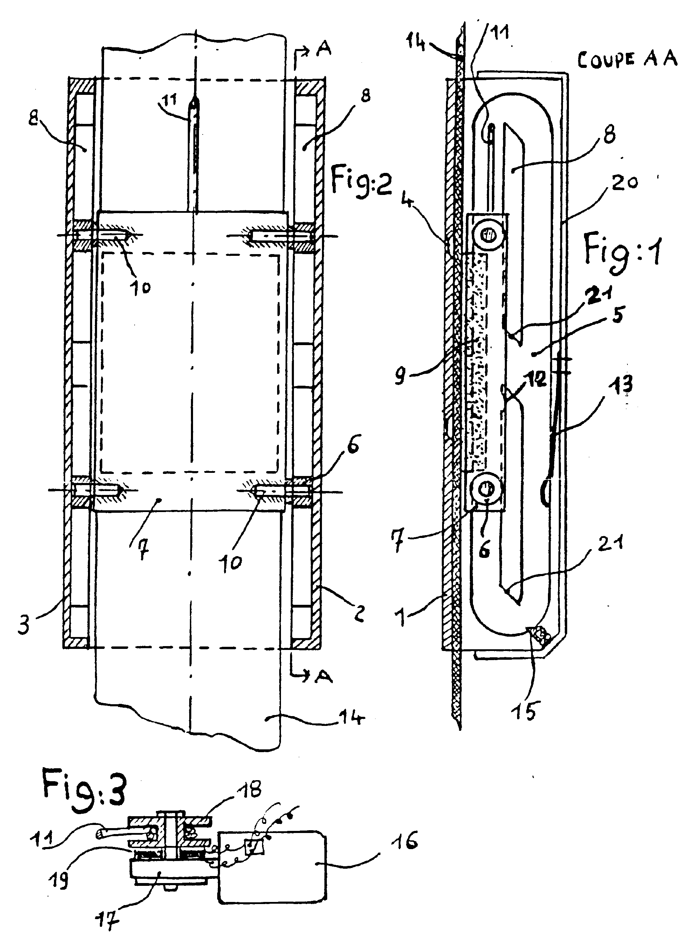

En se référant à la Fig.1, le dispositif comprend un boîtier de forme parallélépipèdique, dans le choix préférentiel décrit, composé d'une partie ex-Ortérieure représentée par un fond 1 sur lequel sont fixés des côtés 2 et 3. Des trous 4 servent à la fixation du boîtier sur le montant vertical du véhicule. Une gorge 5 est ménagée dans les deux côtés, pour constituer un chemin de roulement pour des galets 6 d'un curseur 7, lui faisant effectuer, grâce aux cames 8 respectives avec lesquelles coopérent les galets 6, une trajectoire montante au cours de laquelle le curseur pince la ceinture de sécurité 14 à la sortie de l'enrouleur. Ce pincement s'effectue par exemple par des pans inclinés 21, et par une matière élastique et agrippante telle que du caoutchouc mousse 9, fixée dans le curseur 7. Le curseur circule comme dit plus haut dans les gorges 5 par l'intermédiaire des galets 6 tournant sur leurs axes respectifs 10, et est tracté en mouvement montant d'entraînement de la ceinture 14 par un câble 11 pour arriver dans des creux 12 ménagés dans les cames 8 déterminant un point dur qui délimite une position d'arrêt et de maintien en position détendue de la ceinture 14. Par sollicitation volontaire ou non de la ceinture 14, les galets 6 du curseur dépassent les creux déterminant ce point dur et pasent derrière les cames 8 s'éloignant ainsi de la ceinture 14 et la libérant complètement. Le curseur 7 sous l'effet de son poids redescend en position basse de départ, sollicité par un ressort 13 fixé sur un capot 20 du boîtier, ce ressort remettant les galets 6 du curseur devant les rampes des cames 8 pour le mouvement d'écrasement du caoutchouc 9 et d'entraînement de la ceinture 14 du mouvement suivant. En position basse, le curseur 7 peut être maintenu en bonne position par des ergots à ressort 15.

Un automatisme est prévu en adjoignant à ce dis-

2

positif (par exemple) un moteur 16 et un réducteur 17 qui entraînent un enrouleur 18 dans lequel le câble 11 s'enroule et tracte le curseur 7 vers le haut. Cet entraînement débrayable pour la descente du curseur se fait par l'embrayage magnétique 19 couplé à l'alimentation du moteur 16.

## Revendications

1. Dispositif d'entraînement et de maintien dans une position détendue d'un brin (14) d'une ceinture de sécurité à enrouleur d'un véhicule automobile, caractérisé en ce qu'il comporte un boîtier fixé sur le véhicule automobile et muni d'un fond (1), dans lequel coulisse le brin (14), et un curseur (7) déplaçable dans le boîtier sous la commande de moyens d'actionnement (11) à partir d'une position de départ, le long d'un premier trajet de pincement du brin (14) entre le curseur (7) et le fond (1) du boîtier, un second trajet d'entraînement du brin et d'immobilisation de celui-ci par pincement, dans une position détendue, un troisième trajet de relâchement du brin et un quatrième trajet de retour à la position de départ.

2. Dispositif selon la revendication 1, caractérisé en ce que le curseur comprend des tétons (6) déplaçables dans des gorges (5) ménagées dans des côtés (2, 3) du boîtier (1), ces gorges (5) comprenant une première portion inclinée (21), délimitant le premier trajet, une seconde portion à peu près parallèle au fond (1) du boîtier, délimitant le second trajet, une troisième portion inclinée, délimitant le troisième trajet et une quatrième portion à peu près parallèle au fond (1) du boîtier, délimitant le quatrième trajet.

3. Dispositif selon la revendication 1 ou 2, caractérisé en ce que le curseur (7) comporte une garniture en caoutchouc (9) de pincement du brin (14).

4. Dispositif selon l'une quelconque des revendications précédentes, caractérisé en ce que les moyens d'actionnement comprennent un câble (11) actionné manuellement par un utilisateur.

5. Dispositif selon l'une quelconque des revendications 1 à 3, caractérisé en ce que les moyens d'actionnement comprennent un câble (11) actionné par un moto-réducteur électrique (16,17,18,19).

6. Dispositif selon la revendication 2, caractérisé en ce que la seconde partie des gorges (5) comprend un décrochement (12) déterminant un point d'arrêt en position détendue du brin.

## Patentansprüche

1. Vorrichtung zum Verschieben eines Stranges (14) eines Aufroll-Sicher-heitsgurtes für ein Kraftfahrzeug in eine spannungslose Position und zum Festhalten desselben in dieser Position, dadurch gekennzeichnet, daß sie ein an dem Kraftfahrzeug befestigtes Gehäuse mit einem Bodenteil (1), in dem der Slang (14) läuft, und einen Läufer (7) aufweist, der, gesteuert, durch Betätigungsmittel (11), in dem Gehäuse beweglich ist von einer Anfangsposition aus längs einer ersten Bahn zur Klemmung des Stranges (14) zwischen dem Läufer (7) und dem Bodenteil (1) des Gehäuses, einer zweiten Bahn zur Mitnahme des Stranges und zur Klemmfixierung desselben in einer spannungslosen Position, einer dritten Bahn zur Freigabe des Stranges und einer vierten Bahn zur Rückkehr zur Anfangsposition.

2. Vorrichtung nach Anspruch 1, dadurch gekennzeichnet, daß der Läufer Ansätze (6) aufweist, die in Rillen (5) in den Seiten (2,3) des Gehäuses (1) verschiebbar sind, wobei die Rillen (5) einen geneigten ersten Abschnitt (21), der die erste Bahn begrenzt, einen annähernd parallel zum Bodenteil (1) des Gehäuses verlaufenden zweiten Abschnitt, der die zweite Bahn begrenzt, einen geneigten dritten Abschnitt, der die dritte Bahn begrenzt, und einen annähernd parallel zum Bodenteil (1) des Gehäuses verlaufenden vierten Abschnitt aufweisen, der die vierte Bahn begrenzt.

3. Vorrichtung nach Anspruch 1 oder 2, dadurch gekennzeichnet, daß der Läufer (7) eine Klemmeinrichtung (9) aus Gummi zur Klemmung des Stranges (14) aufweist.

4. Vorrichtung nach einem der vorstehenden Ansprüche, dadurch gekennzeichnet, daß die Betätigungsmittel ein manuell von einem Benutzer betätigtes Kabel (11) aufweisen.

5. Vorrichtung nach einem der Ansprüche 1 bis 3, dadurch gekennzeichnet, daß die Betätigungsmittel ein Kabel (11) aufweisen, das durch einen elektrischen Getriebemotor (16,18,18,19) betätigt wird.

6. Vorrichtung nach Anspruch 2, dadurch gekennzeichnet, daß der zweite Abschnitt der Rillen (5) einen Absatz (12) aufweist, der einen Arretierungspunkt in der spannungslosen Position des Stranges bestimmt.

## Claims

1. Device for driving and maintaining in a slackened position a strand (14) of a self-winding safety belt of a motor vehicle, characterised in that it comprises a housing fastened to the motor vehicle and provided with a bottom (1), in which the strand (14) slides, and a rider (7) displaceable in the housing under the control of actuating means (11) from an initial position along a first travel gripping the strand (14) between the rider (7) and the bottom (1) of the housing, a second travel driving the strand and immobilising the latter in a slackened position by gripping, a third travel releasing the strand and a fourth travel returning to the initial position.

2. Device according to Claim 1, characterised in that the rider comprises stubs (6) displaceable in grooves (5) made in sides (2,3) of the housing (1), these grooves (5) comprising an inclined first portion (21) delimiting the first travel, a second portion approximately parallel to the bottom (1) of the housing and delimiting the second travel, an inclined third portion delimiting the third travel and a fourth portion approximately parallel to the bottom (1) of the housing and delimiting the fourth travel.

3. Device according to Claims 1 or 2, characterised in that the rider (7) possesses a rubber lining (9) for gripping the strand (14).

4. Device according to any one of the preceding claims, characterised in that the actuating means comprise a cable (11) actuated manually by a user.

5. Device according to any one of Claims 1 to 3, characterised in that the actuating means comprise a cable (11) actuated by a geared electric motor (16,17,18,19).

6. Device according to Claim 2, characterised in that the second part of the grooves (5) comprises an offset (12) determining a stopping point for the strand in the slackened position.

**Fig:2**

**Fig:1**

COUPE A A

**Fig:3**